# EUROPEAN PATENT APPLICATION

(11) **EP 4 516 440 A2**
(43) Date of publication of application: **05.03.2025**
(21) Application number: 24195643.2
(22) Date of filing: 21.08.2024
(51) Int. Cl.: B23K 9/095, B23K 9/173, B23K 9/32

(54) **WELDING SYSTEMS FOR CONTROLING THE FLOW RATE OF FUME EXTRACTION BASED ON WELD POROSITY**

(30) Priority: 29.08.2023 US 202363579397 P; 29.07.2024 US 202418787334
(71) Applicant: Illinois Tool Works Inc., Glenview IL 60025 (US)
(72) Inventor: WAGNER, Dustin, Glenview, 60025 (US)
(74) Representative: HGF

(57) **Abstract**

The present application relates to welding systems (100) for controlling the flow rate of fume extraction based on level of porosity in the weld. One or more sensors (70) may monitor a condition of the welding torch (12) to determine a level of porosity of a weld. Control circuitry (110) is operable to receive signals from the one or more sensors (70) and/or power supply in order to determine the level of porosity. The control circuitry (110) can compare information in the signals to a list of values associated with weld porosity to determine whether the level of porosity is within a desired range. The control circuitry (110) controls the fume extraction system to adjust suction airflow based on the determined level of porosity.

## Description

### CROSS REFERENCE TO RELATED APPLICATIONS

This application is a Non-Provisional Patent Application claiming priority to U.S. Provisional Patent Application No. 63/579,397 entitled "Systems And Methods To Control Fume Extraction Based On Weld Porosity" filed August 29, 2023, which is herein incorporated by reference in its entirety.

### BACKGROUND

A wide range of industrial, commercial, hobby and other applications result in airborne components that can be removed with proper extraction and filtering. Metal working operations, for example, range from cutting, welding, soldering, assembly, and other processes that may generate smoke and fumes. In smaller shops it may be convenient simply to open ambient air passages or to use suction or discharge air from fans to maintain air spaces relatively clear. In other applications, enclosed and/or cart-type fume extraction systems are used. In industrial settings, more complex fixed systems may be employed for extracting fumes from specific works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces.

A number of systems have been developed for fume extraction, and a certain number of these are currently in use. In general, these use suction air to draw fumes and smoke from the immediate vicinity of the metal working operation, and to filter the fumes and smoke before returning the air to the room or blowing the air to an outside space.

Further improvements are needed, however, in fume extraction systems. For example, it would be useful to be able to control suction in response to weld porosity of the weld, thereby improving weld quality.

### SUMMARY

The present disclosure provides improvements to conventional fume extraction designs. Example fume extraction systems can automatically and/or manually control fume suction at one or more work stations, in response to data corresponding to a level of porosity of a weld. These and other features and advantages of the present invention will be apparent from the following detailed description, in conjunction with the appended claims.

### BRIEF DESCRIPTION OF THE DRAWINGS

The benefits and advantages of the present invention will become more readily apparent to those of ordinary skill in the relevant art after reviewing the following detailed description and accompanying drawings, wherein:
FIGS. 1A to 1C illustrate example fume extractor systems, in accordance with aspects of this disclosure.
FIG. 2 illustrates an example fume extractor systems operating with a robotic welder, in accordance with aspects of this disclosure.
FIG. 3 provides a method of controlling a fume extraction system, in accordance with aspects of this disclosure.

The figures are not necessarily to scale. Where appropriate, similar or identical reference numbers are used to refer to similar or identical components.

### DETAILED DESCRIPTION

Disclosed are systems and methods for fume extraction control. In particular, a fume extraction system, such as for a welding operation, includes one or more motors and/or valves to control fume suction airflow.

In some examples, a welding torch performs a welding operation on one or more workpieces, thereby creating fumes, debris, etc. One or more sensors (e.g., an optical camera, a laser scanner, a magnetic sensor, a voltage sensor, a current sensor, a voltage or current output, etc.) monitor a characteristic of the welding process (e.g., a smoothness of a surface of the workpieces and/or a weld bead, an output voltage or current, a voltage at the weld, a contact tip to work distance (CTWD), a position or orientation of the torch relative to one or more surfaces of the workpiece, etc.) to determine a level of porosity in the weld. The characteristics may be emblematic of pores presented in the weld, and/or an erratic arc during the weld process.

Control circuitry (e.g., associated with the fume extraction system and/or the welding system) is operable to receive signals from the one or more sensors, welding system, and/or the fume extraction system corresponding to the weld and/or the welding torch. The control circuitry can compare information from the sensors and/or systems to a list of weld characteristics and/or welding torch positions associated with porosity levels (e.g., stored in a local or networked database). Based on the comparison, the control circuitry can determine a desired suction airflow at the one or more workpieces. In some examples, the control circuitry can automatically control a speed of the motor and/or a position of a valve to achieve the desired suction airflow. As a result, suction airflow is carefully controlled during a welding process to efficiently and effectively remove fumes and/or debris from the work environment while ensuring adequate levels of porosity in the weld.

In disclosed examples, the fume extraction system is connected to a fume gun and is controlled to regulate suction airflow based on a determined level of porosity in the weld. For instance, if the suction airflow volume and/or rate is too high, shielding gas may be drawn away from the weld, exposing the weld to environmental contaminants. This situation can arise if the suction airflow level is set too high and/or if an operator changes a position or orientation of the welding torch (e.g., welding into a corner), such that the joint geometry relative to the welding torch changes causing a change in airflow at the welding site. These conditions can increase an amount of porosity in the weld.

Conventional fume extraction systems operate at a distance from the work environment, often resulting in a single, unchanging amount of suction during welding. As a welding operation progresses, however, the need for suction may change. For instance, a welder may switch between welding tools, consumables, welding joints, welding speeds, workpieces, etc., each of which may benefit from different amounts of suction. For example, as the position or orientation of a welding torch changes relative to a workpiece (e.g., depending on a type of joint, etc.), shielding gas may be evacuated more or less easily. If too much or too little shielding gas is applied during welding, the level of porosity in the weld can increase, thereby comprising the quality of the weld. A number of other conditions can similarly effect porosity, such as environmental factors (e.g., welding in a field environment), and/or changes to the filler material and/or workpiece material during a welding operation.

By contrast, the disclosed fume extraction system automatically detects a level of porosity (e.g., from voltage and/or current feedback, and/or sensor data) and then automatically reduces the suction airflow from the welding torch (e.g., fume gun). This system allows the operator to focus on creating the weld, while ensuring proper application of shielding gas and a desired amount of airflow suction.

In disclosed examples, an amount of suction provided from a fume extraction system during a welding operation is controlled based on a level of porosity in the weld. Such control can be implement remotely and in real-time (e.g., responsive to changing conditions) during a welding operation. For example, welding operations may employ fume extraction source capture systems (e.g., fume guns), which include fume nozzles and/or fume extraction conduits/hoses on or near a tip of the welding torch. The fume nozzles are connected to a high speed, high flow fume extraction unit. However, certain welding positions/applications operate most effectively with different amounts of suction. In order to avoid evacuation of needed shielding gases (and avoid possible weld porosity issues stemming therefrom), the fume extraction system can be controlled, as disclosed herein.

This stands in contrast to conventional fume capture systems, which require the operator to adjust the suction on the fume gun by manually operating a valve or some other type of vent. This requires the operator to recognize that an adjustment is needed, and then the amount of adjustment to correct the issue. This often requires a great deal of experience, and takes the operator's focus from the task of welding.

Advantageously, the disclosed fume extraction systems and associated control results in a reduction or elimination of porosity in the weld, while improving ease of use by automatically determining an amount of adjustment, and implementing that adjustment.

In an example, the amount of suction is remotely adjusted during welding by controlling a speed of a variable-frequency drive (VFD) motor that provides negative airflow into the fume extraction system from the fume nozzle. In some examples, valving or other suitable devices can be controlled to adjust the suction flow for a given welding torch. Multiple welding torches (e.g., equipped with source capture devices) can be connected to a single fume extraction unit (e.g., via a single hose or multiple hoses). The valves/adjustment devices can be controlled individually to control the suction flow at the point of welding, independent of any other welding torch/welding site.

Control circuitry can be incorporated within the fume extraction system, on the welding torch itself, an associated robot welding system, and/or with another related machine (e.g., a wire feeder, welding power source, remote control). Suction flow may be controlled by a computing platform or control circuitry, such as in response to a monitored condition (e.g., via one or more sensors) and/or based on one or more parameters of an associated welding system (e.g., power output, wire feed speed, etc.). Sensor data of the monitored conditions may be used to determine a level of porosity, if an adjustment in suction flow is needed, provide an alert to an operator as to the changing conditions, and/or control an adjustment to the system automatically. Control can be automatic (e.g., in response to one or more conditions monitored by sensors, and determination of a level of porosity outside a desired range) and/or in response to a user input (e.g., an input via a trigger, knob, pedal, touchscreen, etc.).

Advantageously, the disclosed fume extraction systems can be incorporated with automated welding systems (e.g., robotic welders), and/or with manual welding torch applications as well. The disclosed fume extraction systems can be integrated with the welding system and/or connected thereto.

In disclosed examples, a welding system includes a fume extraction system; a welding torch to perform a welding operation; and control circuitry to determine a level of porosity corresponding to a weld; and adjust a flow rate of fume extraction when the level of porosity exceeds one or more threshold porosity levels.

In some examples, the control circuitry is further configured to control a motor of the fume extraction system to adjust the flow rate.

In some examples, the control circuitry is further configured to receive data corresponding to one or more characteristics of the weld; compare the one or more characteristics to a listing of threshold characteristics corresponding to porosity of a weld; and determine the level of porosity corresponding to the weld based on the comparison.

In examples, the control circuitry is further configured to adjust the flow rate by a first amount when the level of porosity violates a first threshold; and adjust the flow rate by a second amount when the level of porosity violates a second threshold, the first threshold being different from the second threshold.

In some examples, a sensor is included to monitor the one or more characteristics.

In examples, the sensor is one or more of an optical camera, a laser scanner, or a voltage sensor.

In examples, the one or more characteristics includes one or more of surface smoothness of the weld, or a voltage output.

In some examples, a power supply and a wire feeder are included, the welding torch to receive welding power from the power supply and to receive a welding wire from the wire feeder.

In examples, a vacuum hose connects the welding torch to the fume extraction system.

In some examples, a communications channel transmits information between the control circuitry and the fume extraction system.

In examples, the communications channel is one of a wired or wireless channel.

In some examples, the one or more characteristics is a voltage, the control circuity to adjust the flow rate of the fume extraction system when an average voltage value exceeds a threshold voltage value over a predetermined period of time.

In some disclosed examples, a welding system includes a fume extraction system; a welding torch to perform a welding operation; and a welding power supply to provide power to the fume extraction system and the welding torch, the welding power supply comprising control circuitry to determine a level of porosity corresponding to a weld; and adjust a power output to the fume extraction system to control a flow rate of the fume extraction system based on the level of porosity.

In some examples, control circuitry is configured to monitor one or more characteristics of the weld; determine a value of the one or more characteristics; and compare the value to a list of threshold porosity characteristic values corresponding to weld porosity.

In some examples, the control circuitry is further configured to adjust the power output by reducing power to the fume extraction system by a first amount in response to the value exceeding a first threshold porosity characteristic value of the list of threshold operating condition values.

In some examples, the control circuitry is further configured to adjust the power output by reducing power to the fume extraction system by a second amount in response to the value exceeding a second threshold porosity characteristic value of the list of threshold operating condition values.

In some examples, the control circuitry is configured to generate an alert in response to the value exceeding a threshold value of the list of threshold porosity characteristic values.

In some examples, the control circuitry is configured to generate an alert in response to the value exceeding a threshold value of the list of threshold porosity characteristic values.

In some examples, the control circuitry is configured to generate an alert in response to the value falling below a threshold value of the list of threshold porosity characteristic values corresponding to an operating level.

In some examples, the control circuitry is configured to generate an alert in response to a determination that changes to the fume extraction level did not return the value below a threshold value of the list of threshold porosity characteristic values corresponding to an operating level.

When introducing elements of various embodiments described below, the articles "a," "an," and "the" are intended to mean that there are one or more of the elements. The terms "comprising," "including," and "having" are intended to be inclusive and mean that there may be additional elements other than the listed elements. Moreover, while the term "exemplary" may be used herein in connection to certain examples of aspects or embodiments of the presently disclosed subject matter, it will be appreciated that these examples are illustrative in nature and that the term "exemplary" is not used herein to denote any preference or requirement with respect to a disclosed aspect or embodiment. Additionally, it should be understood that references to "one embodiment," "an embodiment," "some embodiments," and the like are not intended to be interpreted as excluding the existence of additional embodiments that also incorporate the disclosed features.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, the terms "first" and "second" may be used to enumerate different components or elements of the same type, and do not necessarily imply any particular order.

As used herein the terms "circuits" and "circuitry" refer to any analog and/or digital components, power and/or control elements, such as a microprocessor, digital signal processor (DSP), software, and the like, discrete and/or integrated components, or portions and/or combinations thereof, including physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller.

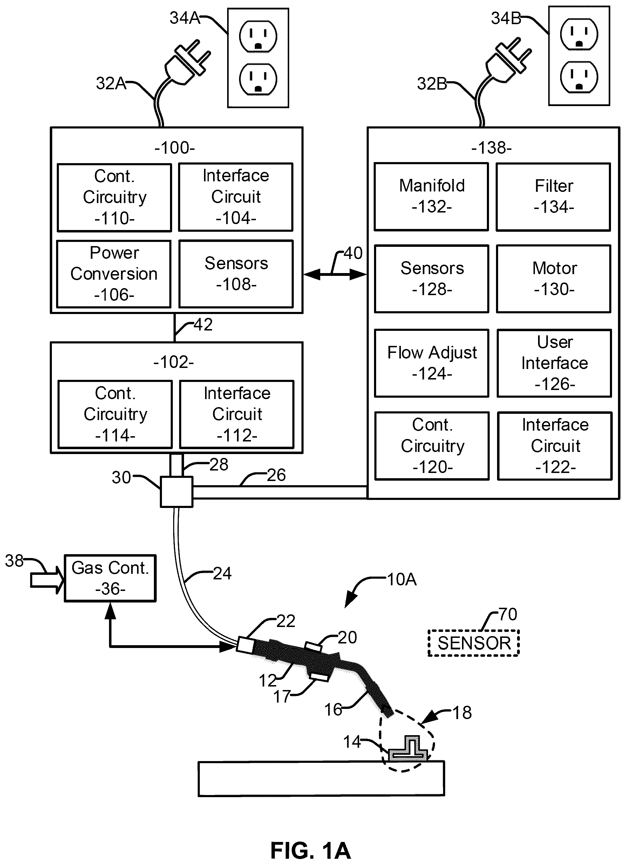

Turning now to the drawings, FIG. 1A illustrates a fume extraction system 10 for extracting airborne components, such as smoke, fumes, particulate matter, and more generally, workspace air as indicated by reference numeral 18 from a work area including a workpiece 14, with the fume extraction system 10 being incorporated with a welding system 100. In the illustrated embodiment, the fume extraction system 10 include one or more of a fume nozzle 16, a hose 26, and a fume extraction unit 138, which may include one or more of control circuitry 120, interface circuit 122, a flow adjustment device 124, a user interface 126 (e.g., touchscreen, control panel, etc.), one or more sensors 128, and/or a motor 130 (e.g., a fixed speed motor, a variable speed motor, a VFD, etc.). The fume extraction unit 138 can include a manifold 132 into which the hose 26 connects, drawing the fumes into the manifold 132, which can be collected, filtered and/or removed via a filter 134. The flow adjustment device 124 can include valving and/or louvers, which can be adjusted manually, mechanically, and/or automatically, such as via control of one or more connected actuators (in response to a sensor value, power supply characteristic, and/or user input).

The welding system 100 can include one or more components, including but not limited to interface circuitry 104, power conversion circuitry 106, one or more sensors 108, and/or control circuitry 110. A wire feeder 102 can be connected to and/or integrated with the welding system 100 via one or more cables 42, the wire feeder 102 including but not limited to interface circuitry 112 and/or control circuitry 114. Operation of the welding system 100, the wire feeder 102, and/or the fume extraction unit 138 can be coordinated between control circuitry 110, 114, and/or 120, and/or a single control circuit may transmit commands to the other control circuitry.

The systems may combine outputs in order to provide a single and/or combined conduit 24 to the welding torch 12. For instance, the hose 26 may connect with a power and/or wire output 28 from the welding system 100 and wire feeder 102. They connect at a j unction 30 to be channeled into conduit 24, which may be a type of unicable to provide power, data, shielding gas, and/or wire to the welding torch 12, as well as a hose to draw out air to the fume extraction unit 138. In some examples, a gas control system 36 receives shielding gas from a gas source 38, and regulates flow of the gas into the welding torch 12. Although illustrated as being applied directly to the torch, in some examples the shielding gas is also channeled through the conduit 24 (e.g., conveyed through output 28 and/or added at junction 30).

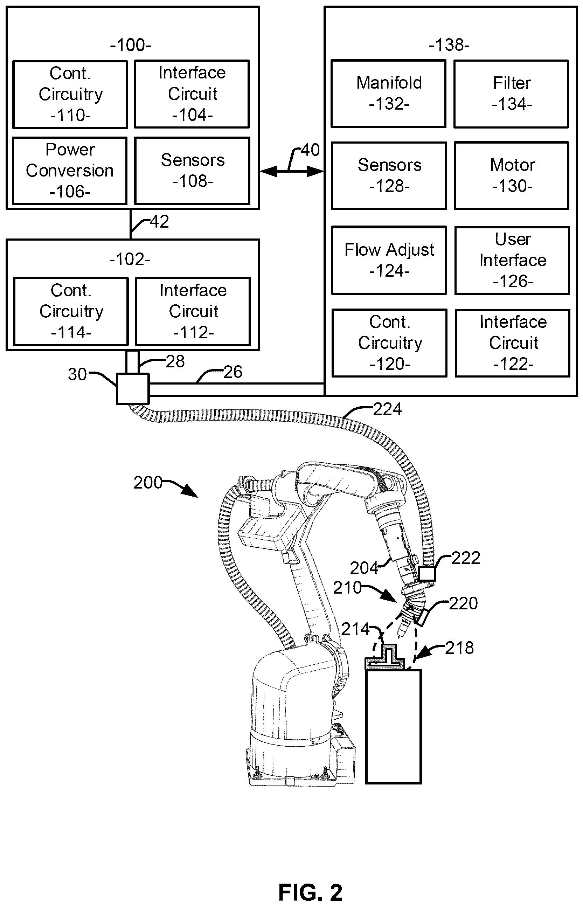

In some examples, the welding torch 12 is a manually operated torch. The welding system 100 can also be configured to control a robotic welding system, with a robotic arm to support and manipulate a welding torch 12 (e.g., as shown in FIG. 2). The welding system 100 is connected to the fume extraction unit 138 via a cable 40 (and/or other power and/or communications channel), to coordinate control between the welding system 100 and the fume extraction unit 138.

In disclosed examples, operation of the fume extraction unit 138 is integrated with the welding system 100. For example, one or more operating parameters of the welding system 100, such as welding or torch type, wire feed speed and/or power output, can be sent to the control circuitry 120 to adjust an amount of fume suction (e.g., by controlling speed of the motor 130).

In some examples, the control circuitry 110 and/or sensors 108 of the welding system 100 monitor one or more characteristics of the weld (e.g., voltage and/or current output and/or sensor feedback) and, through analysis of the collected data, make a determination of the level of porosity. For instance, the control circuity 110 can command the fume extraction unit 138 to adjust the flow rate of the fume extraction system when an average voltage and/or current value exceeds a threshold value (e.g., stored in memory at the welding system 100 and/or the fume extraction unit 138) over a predetermined period of time. In some examples, the voltage and/or current values (collected and/or averages) are transmitted to the control circuitry 120, which controls the fume extraction unit 138 accordingly. Communications between the two systems can be implemented at interface circuitry 104 and 122 via cable 40, and/or via a wireless transmitter (e.g., Bluetooth, WiFi, ZigBee, etc.) as digital or analog signals.

For example, based on the values of the weld characteristics, one or more of the flow adjustment device 124 and/or the motor 130 can be adjusted to achieve a desired flow rate. In some examples, the welding torch 12 is equipped with a separate flow adjustment device and/or valve 22, which may be controlled by the control circuitry 110 and/or 120.

In some examples, one or more sensors can detect an amount and/or concentration of shielding gas at the welding site. The sensor data corresponding to the concentration can be transmitted to the control circuitry 110, 120, which is operable to command the motor 130, valve 124, and/or valve 22 to adjust an amount of suction airflow 18 at the welding site. For instance, one or more inputs from the sensors can be used to inform control circuitry 120. One or more sensors can be arranged with the welding torch 12 (e.g., sensors 20), the fume nozzle 102, with the fume extraction unit 138 (e.g., sensors 128), the welding system 100 (e.g., sensors 108), and/or arranged within the work environment (e.g., sensors 70, mounted to the welding system 100, a wall, nearby equipment, etc.). Independently or collectively, the sensors monitor characteristics of the welding environment, which can include an image of the weld bead to determine porosity, shielding gas concentration, welding output, movement, position, and/or orientation of the welding torch 12 (e.g., the contact tip) relative to one or more surfaces of the workpiece 14.

Based on a comparison of the values associated with the monitored characteristics, the control circuitry 110, 120 determines a level of porosity in the weld, determines a desired suction airflow based on the porosity (such as via a look up table or calculation), and controls the motor 130 to change speed to achieve the desired suction airflow. Additionally or alternatively, the control circuitry 120 can control a position of a flow adjustment device 124, 22, which may be a valve or louver, and adjust a position of the valve or louver to achieve the desired suction airflow.

For example, one or more hose adjustment devices 22 can be arranged on or near the welding torch 10A. The hose adjustment devices 22 can be arranged at an interface or junction between the cabling 24, and/or incorporated within the hose itself. In some examples, the welding torch 10A is connected to the fume extraction unit 138 by a single fume hose, with each torch employing a dedicated hose adjustment device.

In some examples, adjustment of the flow adjustment devices 124 and/or the hose adjustment devices 22 may be optimized for specific operations of the system (e.g., welding process, weld joint, etc.). Several different devices and/or techniques are presently contemplated for such adjustment and may include, for example, a bypass valve, a louver, or other mechanical device which may be adjusted to limit the flow of air from the fume extraction system 138 and, consequently, the intake of air into the nozzle 16 from the area 18. The weld joints can include a corner j oint, a lap joint, a butt j oint, an internal pipe joint, an external pipe joint, an edge joint, or a T-weld, as a list of non-limiting examples.

For example, user inputs may be provided via interface controls at 104, 112, 126, and/or controls 17 on the welding torch 10A to control one or both adjustments, and/or data from sensors corresponding to the welding operation. The inputs/data can be communicated to the control circuitry to adjust flow adjustment devices 124 to regulate airflow (e.g., via adjustment to motors 130 and/or valves 124, 22). In some examples, the user inputs and/or data from the sensors can directly control hose adjustment devices 22 to regulate airflow. Moreover, other and/or additional components and functionalities may be built into the system.

It should be noted that the fume extraction unit 138 can take any suitable configuration, including a stand-alone base unit, a cart-type unit, fixed or semi-fixed installations, such as those used in industrial, commercial, hobby, as a list of non-limiting examples. One or more components of the fume extraction unit 138 may serve multiple welding torches, workspaces, work cells, weld cells, work locations and areas, and so forth, by separate and/or common conduits, which may provide positive-pressure air to and channel negative-pressure air and airborne components from the workspaces.

In some examples, the hose 26 can convey both a positive pressure or outgoing flow (negative pressure) and a return flow that may contain airborne components to be extracted from the work area. The hoses 26 may be adapted for rotation at one or more interfaces, such as between the nozzle 16 and/or the fume extraction unit 138.

Moreover, it is presently contemplated that the same principles of fluid dynamics and airborne component removal may be applied to "fluids" other than air or gasses (including liquids), and to that extent the teachings of the present disclosure are intended to extend to those applications.

The welding system 100 and fume extraction unit 138 may be powered by one or more sources, such as mains power delivered by one or more outlets or receptacles. For instance, the welding system 100 may connect to outlet 34A via power conductor 32A, whereas the fume extraction unit 138 may connect to outlet 34B via power conductor 32B. The outlets 34A and 34B may connect to a common power source (e.g., mains power) and/or receive power from more than one or different power sources (e.g., engine driven generators, vehicle power, renewable power sources, etc.).

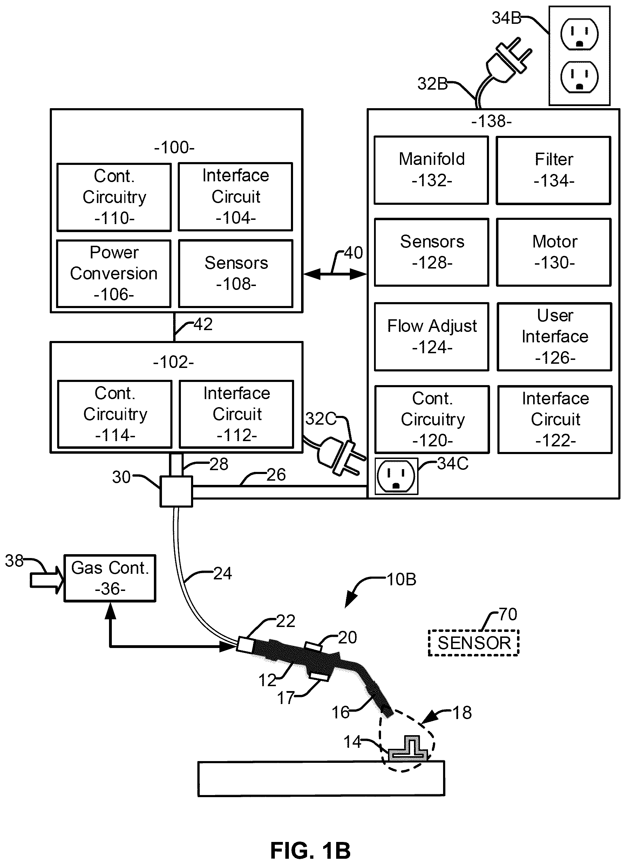

In another example system 10B illustrated in FIG. 1B, in addition to cable 40 operable to convey data and power between the power supply 100 and the fume extraction unit 138, power could be routed from the fume extraction unit 138 to the power supply 100 via the wire feeder 102. In such an example, the power source 100 (including provision of welding power) can be controlled by the wire feeder 102. This configuration allows a streamlined cable management arrangement by allowing control of the fume extraction unit 138 from the welding torch 12. In the example of FIG. 1B, a plug 32C can connect the wire feeder 102 into an outlet 34C at the fume extraction unit 138, which is receiving power from a power source 34B via plug 32B.

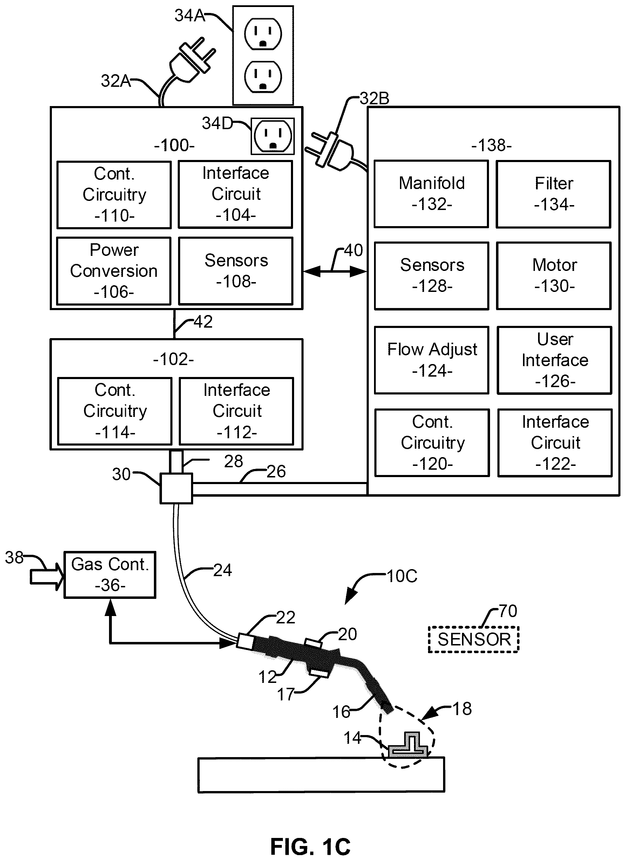

In another example system 10C illustrated in FIG. 1C, in addition to cable 40 operable to convey data and power between the power supply 100 and the fume extraction unit 138, power could be routed from the power supply 100 to the fume extraction unit 138. In such an example, the power source 100 (including provision of welding power) can provide power and/or control to one or both of the fume extraction unit 138 or the wire feeder 102.

This configuration allows a streamlined cable management arrangement by allowing control of the fume extraction unit 138 from the welding torch 12. In the example of FIG. 1B, a plug 32C can connect the wire feeder 102 into an outlet 34C at the fume extraction unit 138, which is receiving power from a power source 34B via plug 32B.

In such an implementation, a selection on a user interface (e.g., integrated with or in addition to the interface circuitry 104) could indicate that the fume extraction unit 138 is connected and configured to receive power from the welding powers supply 100. This selection would allow for suction control/operation of the fume extraction system to be controlled from the power supply 100.

Although several example are provided with a fume extraction system operating with a manually operated welding torch, a similar fume extraction system can be configured to support one or more robotic welding systems.

As shown in the example of FIG. 2, a robotic welding systems 200 includes one or more robotic arms 204 configured to manipulate one or more robotic welding torches 210. The robotic welding torch 210 is connected to fume extraction unit 138 via fume hose 224, and configured for source capture via airflow 218 at workpiece 214.

The robotic welding torch 210 is also connected to the fume extraction unit 138 via j unction 30 and/or one or more communication channels (e.g., wired and/or wireless channels) to transmit control and informational signals between the torches and the unit (e.g., the control circuitry 110, 114, 120).

The robotic welding torch 210 can include one or more sensors 220 (e.g., an optical camera, a laser scanner, a magnetic sensor, a heat sensor, a contact sensor, a voltage sensor, an accelerometer, an inertial measuring unit, etc.) to monitor one or more welding conditions corresponding to weld porosity, as disclosed herein.

Although example fume extraction systems are illustrated as employing a single torch, the disclosed systems and controls can be implemented on two, three, four, five, six, seven, eight, nine, ten or more torches, which may be connected to a single and/or multiple fume extraction systems (e.g., fume extraction system 10). Further, each connected torch may have one or more flow adjustment devices (e.g., hose adjustment devices 22, and/or 222, flow adjustment devices 124, etc.), which may be the same or different from another connected torch.

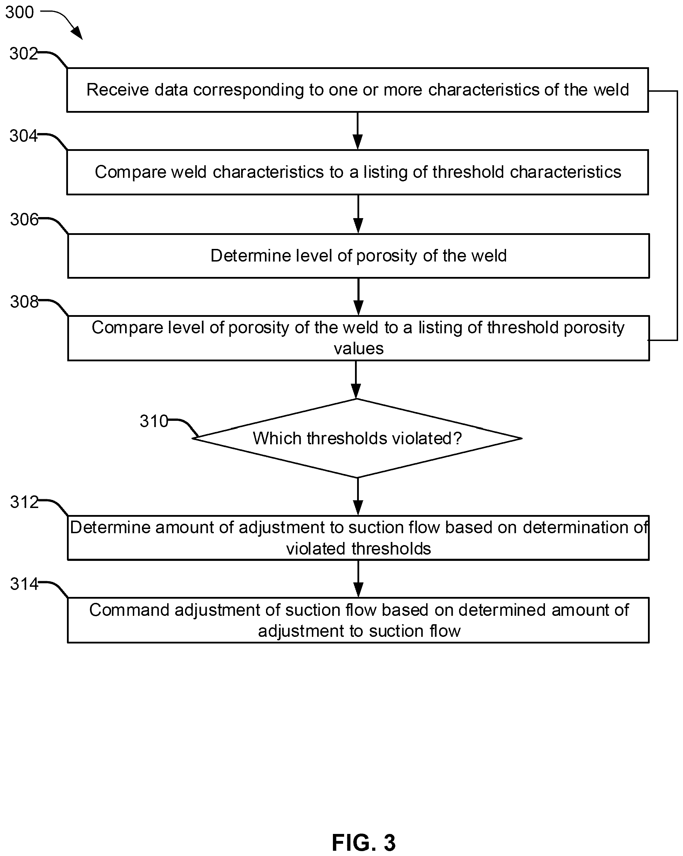

FIG. 3 illustrates a method of operating a fume extraction system, such as the fume extraction system 10 of FIGS. 1 through 2. In block 302, control circuitry (e.g., the control circuitry 110, 114, 120) receives data corresponding to one or more characteristics of the weld. For example, the data may correspond to a value of the one or more characteristics, such as a value measured from one or more sensors and/or provided from the power supply.

In block 304 the one or more characteristics are compared to a listing of threshold characteristics (and/or threshold characteristic values) corresponding to a level of porosity of an example weld, which can be determined empirically and/or from an input received at the control circuitry. In block 306, the level of porosity corresponding to the weld is determined based on the comparison.

In block 308, the level of porosity of the weld is compared to a list of threshold porosity characteristic values corresponding to weld porosity. For example, if the level of porosity of the weld is determined to be within a desired range of porosity level values, the method returns to block 302 to continue to monitor weld characteristics. The range of porosity level values may correspond to a particular welding process, type of material, and/or other related welding aspect.

If the level of porosity of the weld is determined to be outside of the desired range of porosity level values, the method continues to block 310 to determine which threshold is violated. In block 312, an amount of adjustment to the suction flow is determined based on the particular threshold that is violated. For example, if the determined level of porosity is below the desired range, the control circuitry commands the fume extraction system to adjust suction flow by a first amount (e.g., by decreasing an amount of suction). If the determined level of porosity is above the desired range, the control circuitry commands the fume extraction system to adjust suction flow by a second amount (e.g., by increasing an amount of suction). In block 314, the control circuitry commands adjustment to the suction flow by controlling one or more of the speed of the motor (e.g., motor 130) and/or a position of a fume adjustment device (e.g., fume adjustment device 124 and/or valve 22).

In some additional or alternative examples, based on the determined level of porosity, the control circuitry can command adjustment of the flow rate of the shielding gas. The gas control system 36 may include one or more flow regulators, such as a valve, which may be arranged with the gas control system 36, and/or under the control of the gas control system 36. Thus, a change in a flow regulator may alter a rate of flow of the shielding gas at the welding site.

In some examples, the fume extraction system is further configured to generate an alert in response to a given determination. For instance, if the weld porosity is outside the desired range and/or if an adjustment has been made, an alert can be generated and stored with the control circuitry and/or presented to the operator (e.g., at a display, an audible alert, etc.).

In some examples, original equipment or even retrofits for the disclosed fume extraction systems may be made to equipment such as shop vacuum systems, existing evacuation installations, and so forth. It is also contemplated that structures and teachings based on those set forth herein may be employed in specific settings to provide enhanced fume and airborne component collection.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A welding system comprising:
   a fume extraction system;
   a welding torch to perform a welding operation; and
   control circuitry to:
      determine a level of porosity corresponding to a weld; and
      adjust a flow rate of fume extraction when the level of porosity exceeds one or more threshold porosity levels.
Clause 2. The system of clause 1, wherein the control circuitry is further configured to control a motor of the fume extraction system to adjust the flow rate.
Clause 3. The system of clause 1, wherein the control circuitry is further configured to:
   receive data corresponding to one or more characteristics of the weld;
   compare the one or more characteristics to a listing of threshold characteristics corresponding to porosity of a weld; and
   determine the level of porosity corresponding to the weld based on the comparison.
Clause 4. The system of clause 3, wherein the control circuitry is further configured to:
   adjust the flow rate by a first amount when the level of porosity violates a first threshold; and
   adjust the flow rate by a second amount when the level of porosity violates a second threshold, the first threshold being different from the second threshold.
Clause 5. The system of clause 1, further comprising a sensor to monitor the one or more characteristics.
Clause 6. The system of clause 5, wherein the sensor is one or more of an optical camera, a laser scanner, or a voltage sensor.
Clause 7. The system of clause 5, wherein the one or more characteristics includes one or more of surface smoothness of the weld, or a voltage output.
Clause 8. The system of clause 1, further comprising:
   a power supply; and
   a wire feeder, the welding torch to receive welding power from the power supply and to receive a welding wire from the wire feeder.
Clause 9. The system of clause 8, further comprising a vacuum hose connecting the welding torch to the fume extraction system.
Clause 10. The system of clause 1, further comprising a communications channel to transmit information between the control circuitry and the fume extraction system.
Clause 11. The system of clause 10, wherein the communications channel is one of a wired or wireless channel.
Clause 12. The system of clause 1, wherein the one or more characteristics is a voltage, the control circuity to adjust the flow rate of the fume extraction system when an average voltage value exceeds a threshold voltage value over a predetermined period of time.
Clause 13. A welding system comprising:
   a fume extraction system;
   a welding torch to perform a welding operation; and
   a welding power supply to provide power to the fume extraction system and the welding torch, the welding power supply comprising control circuitry to:
      determine a level of porosity corresponding to a weld; and
      adjust a power output to the fume extraction system to control a flow rate of the fume extraction system based on the level of porosity.
Clause 14. The system of clause 13, further comprising control circuitry configured to:
   monitor one or more characteristics of the weld;
   determine a value of the one or more characteristics; and
   compare the value to a list of threshold porosity characteristic values corresponding to weld porosity.
Clause 15. The system of clause 14, wherein the control circuitry is further configured to adjust the power output by reducing power to the fume extraction system by a first amount in response to the value exceeding a first threshold porosity characteristic value of the list of threshold operating condition values.
Clause 16. The system of clause 14, wherein the control circuitry is further configured to adjust the power output by reducing power to the fume extraction system by a second amount in response to the value exceeding a second threshold porosity characteristic value of the list of threshold operating condition values.
Clause 17. The system of clause 14, wherein the control circuitry is configured to generate an alert in response to the value exceeding a threshold value of the list of threshold porosity characteristic values.
Clause 18. The system of clause 14, wherein the control circuitry is configured to generate an alert in response to the value exceeding a threshold value of the list of threshold porosity characteristic values.
Clause 19. The system of clause 14, wherein the control circuitry is configured to generate an alert in response to the value falling below a threshold value of the list of threshold porosity characteristic values corresponding to an operating level.
Clause 20. The system of clause 14, wherein the control circuitry is configured to generate an alert in response to a determination that changes to the fume extraction level did not return the value below a threshold value of the list of threshold porosity characteristic values corresponding to an operating level.

## Claims

1. A welding system comprising:
a fume extraction system;
a welding torch to perform a welding operation; and
control circuitry to:
determine a level of porosity corresponding to a weld; and
adjust a flow rate of fume extraction when the level of porosity exceeds one or more threshold porosity levels.

2. The system of claim 1, wherein the control circuitry is further configured to control a motor of the fume extraction system to adjust the flow rate.

3. The system of claim 1, wherein the control circuitry is further configured to:
receive data corresponding to one or more characteristics of the weld;
compare the one or more characteristics to a listing of threshold characteristics corresponding to porosity of a weld; and
determine the level of porosity corresponding to the weld based on the comparison.

4. The system of claim 3, wherein the control circuitry is further configured to:
adjust the flow rate by a first amount when the level of porosity violates a first threshold; and
adjust the flow rate by a second amount when the level of porosity violates a second threshold, the first threshold being different from the second threshold.

5. The system of claim 1, further comprising a sensor to monitor the one or more characteristics.

6. The system of claim 5, wherein the sensor is one or more of an optical camera, a laser scanner, or a voltage sensor, or
wherein the one or more characteristics includes one or more of surface smoothness of the weld, or a voltage output.

7. The system of claim 1, further comprising:
a power supply; and
a wire feeder, the welding torch to receive welding power from the power supply and to receive a welding wire from the wire feeder, and optionally
wherein the system further comprises a vacuum hose connecting the welding torch to the fume extraction system.

8. The system of claim 1, further comprising a communications channel to transmit information between the control circuitry and the fume extraction system, and optionally
wherein the communications channel is one of a wired or wireless channel.

9. The system of claim 1, wherein the one or more characteristics is a voltage, the control circuity to adjust the flow rate of the fume extraction system when an average voltage value exceeds a threshold voltage value over a predetermined period of time.

10. A welding system comprising:
a fume extraction system;
a welding torch to perform a welding operation; and
a welding power supply to provide power to the fume extraction system and the welding torch, the welding power supply comprising control circuitry to:
determine a level of porosity corresponding to a weld; and
adjust a power output to the fume extraction system to control a flow rate of the fume extraction system based on the level of porosity.

11. The system of claim 10, further comprising control circuitry configured to:
monitor one or more characteristics of the weld;
determine a value of the one or more characteristics; and
compare the value to a list of threshold porosity characteristic values corresponding to weld porosity.

12. The system of claim 11, wherein the control circuitry is further configured to adjust the power output by reducing power to the fume extraction system by a first amount in response to the value exceeding a first threshold porosity characteristic value of the list of threshold operating condition values, or
wherein the control circuitry is further configured to adjust the power output by reducing power to the fume extraction system by a second amount in response to the value exceeding a second threshold porosity characteristic value of the list of threshold operating condition values.

13. The system of claim 11, wherein the control circuitry is configured to generate an alert in response to the value exceeding a threshold value of the list of threshold porosity characteristic values.

14. The system of claim 11, wherein the control circuitry is configured to generate an alert in response to the value falling below a threshold value of the list of threshold porosity characteristic values corresponding to an operating level.

15. The system of claim 11, wherein the control circuitry is configured to generate an alert in response to a determination that changes to the fume extraction level did not return the value below a threshold value of the list of threshold porosity characteristic values corresponding to an operating level.
